# DEMANDE DE BREVET EUROPEEN

(11) **EP 1 067 404 A1**
(43) Date de publication de la demande: **10.01.2001**
(21) Numéro de dépôt: 00401907.1
(22) Date de dépôt: 04.07.2000
(51) Int. Cl.: G01T 1/29

(54) **Tomographie par émission de positrons**

(30) Priorité: 08.07.1999 FR 9908859
(71) Demandeur: Commissariat à l'Energie Atomique, 75752 Paris Cedex 15 (FR)
(72) Inventeur: Verger, Loick, 38000 Grenoble (FR); Bonnefoy, Jean-Paul, 38100 Grenoble (FR); Rostaing, Jean-Pierre, 38470 Vinay (FR)
(74) Mandataire: Ilgart, Jean-Christophe

(57) **Abrégé**

Le détecteur comprend un cristal semi-conducteur (31), suivi d'un préamplificateur de courant dépourvu de condensateur pour délivrer très rapidement, en quelques nanosecondes, le signal émis sur le cristal à un appareillage de mesure. Un domaine privilégié est la détection discrète de photons en tomographie par émission de positrons en médecine nucléaire, où des détections très rapides sont nécessaires.

## Description

On décrira ici un dispositif particulier de détection pour un tomographe à émission de positrons, selon le procédé de médecine nucléaire souvent abrégé en PET.

En médecine nucléaire, on injecte au patient des molécules marquées par différents traceurs radioactifs (oxygène, azote, carbone, fluor, etc.) selon l'organe à observer. Les molécules marquées se fixent sur les tissus en fonction du vecteur utilisé. Chaque traceur associé émet un positron dont la localisation spatiale permettra au médecin de visualiser l'organe. Cette localisation est rendue possible grâce à l'annihilation de positrons dans l'organe, qui provoquent l'émission simultanée de deux photons de même énergie dans des directions opposées. Pour localiser le lieu d'annihilation du positron, on doit disposer de deux réseaux plans de détecteurs opposés et qui devront détecter en coïncidence les deux photons. Les détecteurs des tomographes actuels sont composés d'un scintillateur où les photons sont convertis en lumière, d'un guide de lumière où la lumière se transporte sans se disperser et d'un photomultiplicateur où elle est convertie en charges électriques.

La performance d'un détecteur est déterminée d'une part par son aptitude à absorber le maximum de photons de l'énergie voulue et d'autre part par la vitesse à laquelle il donnera cette information, c'est-à-dire son temps de réponse.

Ce second critère est fondamental dans le procédé PET : lorsqu'un des deux réseaux de détecteurs détecte un photon, on mesure durant une fenêtre temporelle très courte, de 5 à 10 nanosecondes au maximum, l'absorption du photon associé provenant de la même annihilation sur le réseau de détecteurs opposé. Durant cette fenêtre temporelle, des émissions fortuites, provenant d'autres causes, peuvent être détectées sur d'autres détecteurs de ce second réseau et donner une information erronée sur l'origine de l'annihilation du positron, car la droite reliant les deux événements enregistrés et attribués à l'annihilation passe alors à l'écart de son lieu. Plus la fenêtre temporelle de détection est courte, plus la proportion de détection d'émissions fortuites est réduite et plus la résolution spatiale de l'image sera élevée.

L'épaisseur du détecteur et plus précisément de la partie où les photons sont convertis (ici, le scintillateur) est un paramètre important du temps de réponse, car une épaisseur faible régit une réponse brève, la lumière traversant plus vite le détecteur ; il faut toutefois maintenir une épaisseur suffisante pour arrêter une part convenable des photons.

Si les détecteurs à scintillateurs offrent une réponse brève, ils sont moins satisfaisants pour le niveau du signal qu'ils produisent et pour les phénomènes d'éblouissement qui limitent le nombre de coups acceptés par la caméra et donnent ainsi une faible sensibilité. C'est pourquoi on commence à s'intéresser aux détecteurs à base de semi-conducteurs comme les tellurures de cadmium (CdZnTe, CdTe, CdTe dopé, ...), qui permettent une détection directe des photons en les convertissant en porteurs de charges électriques, en nombre très supérieur à celui qui est obtenu en détection indirecte, ce qui accroît le signal obtenu. La collecte des porteurs de charges est réalisée avec simplicité par des électrodes déposées sur le semi-conducteur, auxquelles on applique une tension de polarisation qui crée un champ électrique dans le semi-conducteur, favorisant la migration des porteurs de charges vers les électrodes. L'amplification et la mise en forme du signal sont ensuite réalisées par un circuit électronique intégré à chaque détecteur et plus compact que dans la solution à scintillateur et photo-multiplicateur.

Certaines circonstances rendent toutefois difficile l'obtention de l'avantage attendu d'un signal de bonne qualité. Il faut avant tout remarquer que les semi-conducteurs usuels des tellurures de cadmium présentent des défauts structuraux assez importants qui constituent des pièges pour les porteurs de charges et les arrêtent avant qu'ils n'atteignent les électrodes : l'efficacité de conversion des photons est contrariée.

Dans le cas présent d'un procédé à émission de positrons, où les photons ont une énergie de 511 keV en pratique, une épaisseur de tellurure de cadmium de 12 à 15 mm est requise pour obtenir la même durée d'examen qu'avec des détecteurs à base de scintillateur et photo-multiplicateur. Toutefois, le résultat obtenu laisse à désirer même si une bonne conversion des photons a été réalisée, car un nombre important des porteurs de charges est arrêté par les défauts structuraux de cristallisation et perdu pour la détection ; le signal est de plus étalé sur l'ensemble de la fenêtre de détection, de sorte que son intensité a l'ordre de grandeur du bruit du détecteur et rend la détection problématique. On a eu l'idée de remédier à cette situation en disposant un préamplificateur de charge dans le circuit électronique, dans lequel on intègre aux bornes d'une capacité l'induction créée par le mouvement des porteurs de charges durant leur migration vers les électrodes. Cela revient à mesurer la charge totale lorsque tous les porteurs produits par l'arrivée du photon ont été collectés. Les signaux des photons sont alors bien détectés, mais au bout d'un temps trop long, incompatible avec les exigences exposées plus haut d'une fenêtre temporelle étroite.

Un exemple de détecteur à semi-conducteur en tellurure de cadmium a été proposé par Bertolucci et d'autres dans l'article « Timing properties of CdZnTe detectors for positron emission tomography » paru dans « Nuclear Instruments & Methods in Physics Research A », n°400, 1997, p.107 à 112. Les cristaux sont des blocs de 2 mm d'épaisseur et de 10 mm sur 10 mm de section. Le champ électrique, produit par des électrodes sur les faces latérales du semi-conducteur, est dirigé dans la plus faible direction de la section, si bien que les charges électriques ont toujours moins de 2 mm à parcourir avant d'être captées et risquent donc peu d'être arrêtées par des défauts. De plus, l'épaisseur relativement élevée offre une bonne efficacité de conversion. Malheureusement, la résolution temporelle de 20 à 25 nanosecondes qui est obtenue reste trop élevée. Elle ne pourrait être améliorée qu'en diminuant encore l'épaisseur, à 1 mm par exemple, mais le réseau de détecteurs qu'il faudrait alors construire serait alors trop complexe et coûteux. De plus, les électrodes latérales posent des problèmes de connexion avec les détecteurs adjacents et amènent à réduire la surface de détection en imposant des espacements suffisants entre les détecteurs. Un article par Parnham et d'autres, intitulé « A Study of the Timing Properties of Cd_{0.9}Zn_{0.1}Te », propose en particulier des semi-conducteurs de 3x3x2 mm³ pour obtenir une rapidité de détection suffisante (5,3 nanosecondes pour une énergie de 300 keV), mais l'efficacité de conversion est alors réduite.

Ces tentatives peu fructueuses expliquent que la détection indirecte à scintillateur et photomultiplicateur est encore dominante dans l'art, malgré ses défauts.

L'invention est fondée sur un nouveau procédé de détection, qui améliore sensiblement les performances de la détection directe à semi-conducteur et devrait donc la rendre plus attrayante.

L'idée fondamentale est de remplacer le préamplificateur de charge, d'utilisation naturelle pour détecter des événements discrets comme l'arrivée individuelle de photons, par un préamplificateur de courant, dont la propriété essentielle est qu'il est dépourvu de condensateur et ne retarde donc pas la mesure en effectuant une intégration temporelle. L'accélération de la mesure due au préamplificateur de courant est compensée par une perte de la précision de mesure, qui n'est cependant pas dommageable dans le cas d'un procédé PET de tomographie où les photons sont semblables et où les mesures sont des comptages plutôt que des mesures de niveau. Le rapport du signal sur le bruit est aussi moins bon qu'avec un préamplificateur de charge, mais il reste acceptable, et le bruit du détecteur peut être rendu très faible par de nouvelles méthodes de croissance du cristal dites à haute pression, comme le procédé HPBM (High Pressure Bridgman Method), qui améliorent sa résistivité, en particulier celle du CdZnTe. La résistivité augmentant, il est alors possible d'augmenter la tension appliquée aux électrodes du matériau. Une première conséquence est la diminution de la durée du signal, c'est-à-dire du temps de migration des charges jusqu'aux électrodes : le temps mort du détecteur est plus court. Une seconde conséquence est l'augmentation du signal de crête, ce qui donne un meilleur rapport signal sur bruit. Un autre aspect favorable de l'invention consiste à intégrer complètement l'électronique sous forme d'ASIC ("Application Specific Integrated Circuit") afin de supprimer certaines capacités parasites, comme la longueur de la liaison entre les détecteurs et le préamplificateur, et d'améliorer ainsi très nettement la rapidité de la mesure électronique. L'utilisation d'un semi-conducteur de haute résistivité réduit aussi la capacité de liaison entre le détecteur et le préamplificateur de courant.

On peut disposer le champ électrique de captage des charges parallèlement à la direction de l'irradiation, ce qui réduit l'encombrement latéral du détecteur.

Une autre idée qu'on peut appliquer consiste à disposer un discriminateur de signal, selon un seuil établi, à fraction constante de temps jusqu'à un sommet du signal, dans le circuit électronique.

Pour résumer, l'invention concerne sous sa forme la plus générale un dispositif de détection pour un tomographe à émission de positrons, comprenant une paire de réseaux opposés de détecteurs, les réseaux de détecteurs comprenant des cellules de détection composées d'un bloc en matière semi-conductrice où les photons sont convertis en charges électriques, d'électrodes de création d'un champ électrique dans le bloc, et d'un circuit électronique reliant les électrodes à un appareil de mesure de courant, caractérisé en ce que le circuit électronique comprend un préamplificateur de courant, dépourvu de condensateur.

L'invention sera maintenant décrite en liaison aux figures :
- La figure 1 est une vue d'ensemble de l'invention,
- La figure 2 illustre un détecteur à semi-conducteur de l'art antérieur,
- La figure 3 illustre un préamplificateur de courant,
- La figure 4 est un schéma des détecteurs,
- Et les figures 5 et 6 sont des diagrammes de détection.

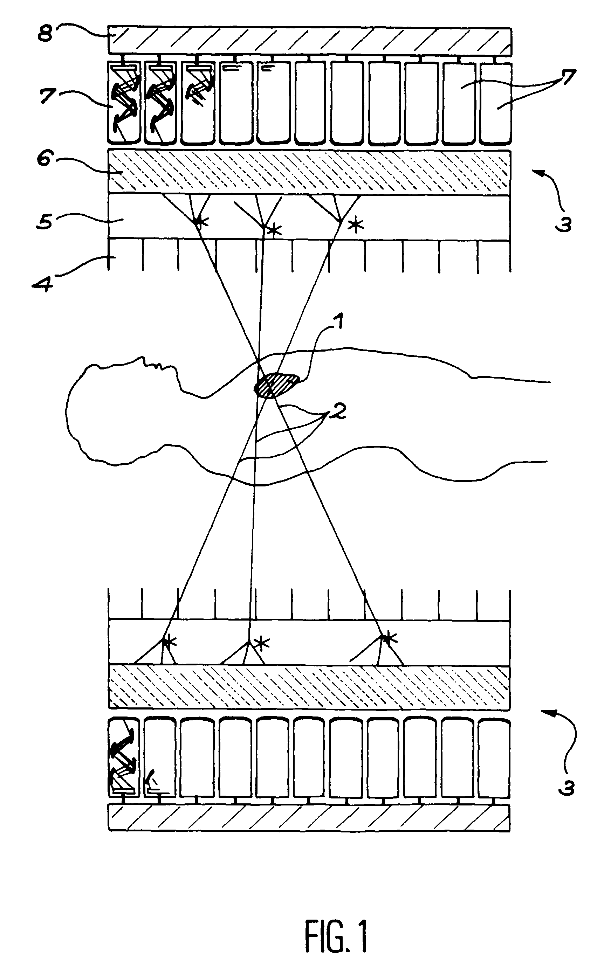

A la figure 1, on a représenté un tronçon soumis à l'examen d'un corps humain dont un organe 1 chargé en traceur radioactif émet des positrons. Chacune des paires de photons émises par un positron qui s'est annihilé parcourt une droite 2 susceptible d'aboutir à une paire de réseaux de détecteurs 3 situés de part et d'autre de l'organe 1. On a représenté ici des réseaux 3 classiques comprenant d'avant en arrière un collimateur 4, une couche de scintillateur 5, un guide de lumière 6 et des tubes photo-multiplicateurs 7 qui aboutissent à un circuit électronique de mesure 8.

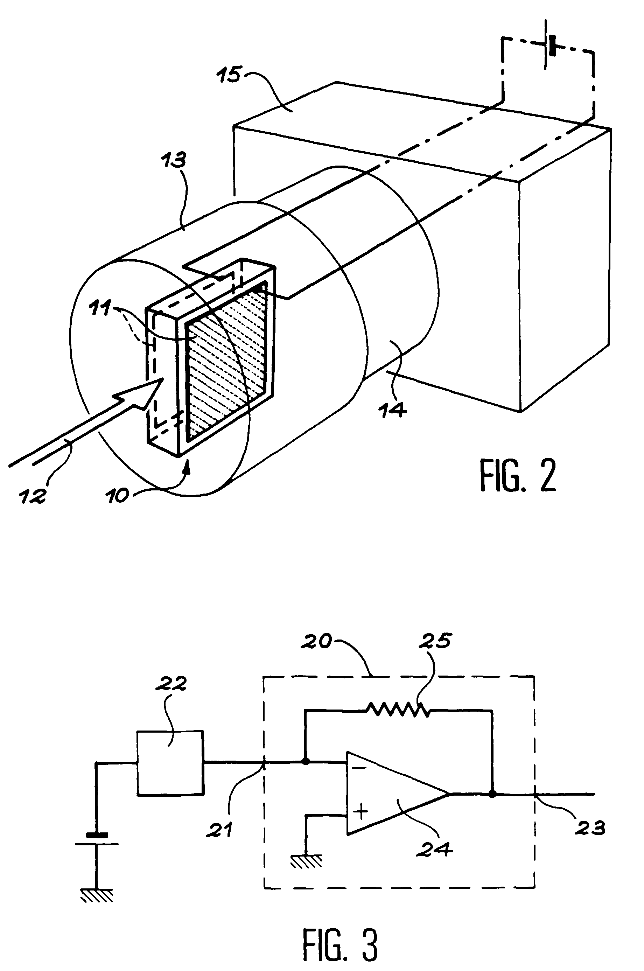

La figure 2 représente un détecteur à semi-conducteur proposé dans l'art antérieur, où le cristal de tellurure de cadmium (CdZnTe) est un bloc parallélipipédique 10 dont deux faces latérales opposées sont couvertes d'électrodes 11 créant un champ électrique transversal, perpendiculaire à la direction d'irradiation 12. L'ensemble est noyé dans une enveloppe de protection 13 à l'arrière de laquelle on trouve un collecteur 14 et un préamplificateur de charge 15.

La figure 3 illustre un préamplificateur de courant 20 dont la borne d'entrée 21 recueille un courant fourni par un dispositif 22 et dont la borne de sortie 23 émet le courant amplifié. Ses éléments essentiels sont un circuit soustracteur 24 dont la borne positive est reliée à la terre, la borne négative à la borne d'entrée 21 et la sortie à la borne 23 ; et une résistance 25 en dérivation du circuit soustracteur 24 entre les bornes 21 et 23. Ce préamplificateur ne comprend pas de condensateur, et on a vu qu'il était avantageux d'éliminer ou de réduire toutes les liaisons capacitives qui pouvaient se trouver entre le préamplificateur 20 et le dispositif 22.

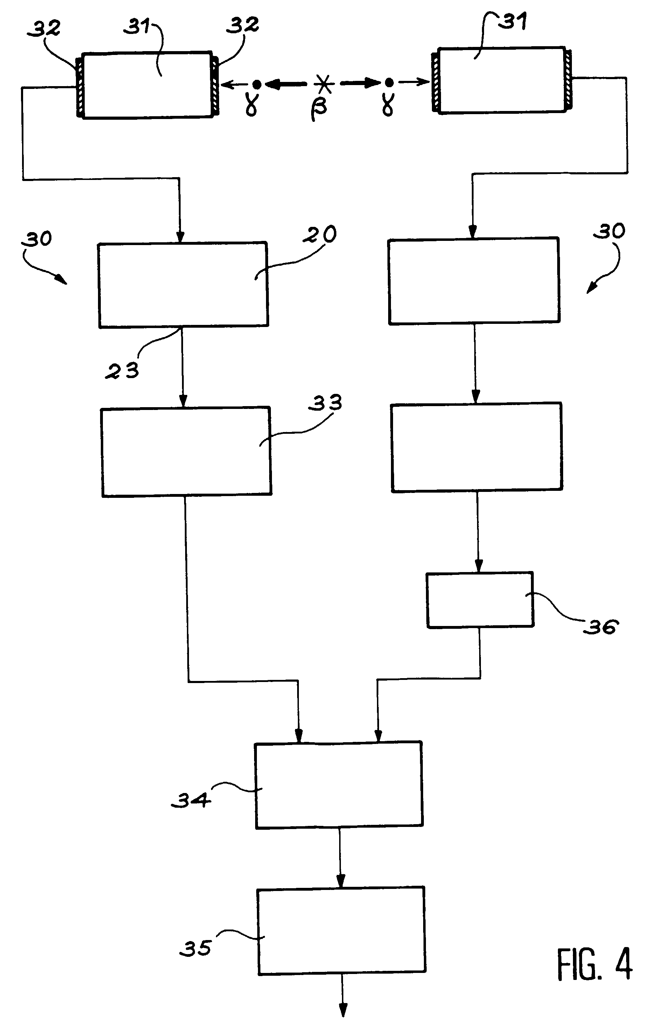

La figure 4 est un schéma illustratif des détecteurs de l'invention. Les photons γ émis à partir d'un positron β parviennent à deux détecteurs 30 appartenant à des réseaux opposés (comme les réseaux 3) qui comprennent chacun un bloc 31 de cristal de tellurure de cadmium (CdZnTe) ayant crû sous pression pour lui donner une résistivité importante, de l'ordre de 10¹⁰ Ωcm ou plus. Des électrodes 32 sont disposées aux extrémités du bloc 31 pour créer un champ électrique dans la direction d'irradiation, et le préamplificateur de courant 20 est adjacent au bloc 31 et lui est relié électriquement. La borne de sortie 23 du préamplificateur 20 est raccordée à un discriminateur 33 ; les discriminateurs 33 des différents détecteurs 30 sont reliés à un convertisseur d'amplitude-temps 34 puis à un analyseur multi-canal 35 qui donne le spectre d'émission en fonction du temps. De plus, un dispositif de retard 36 est disposé derrière les détecteurs 30 d'un des réseaux de la paire, pour que les signaux consécutifs à une même annihilation n'arrivent pas en même temps au convertisseur 34 et ne saturent pas la logique. Les blocs 31 ont de 12 à 15 mm de profondeur, et leurs dimensions transversales ne sont pas critiques.

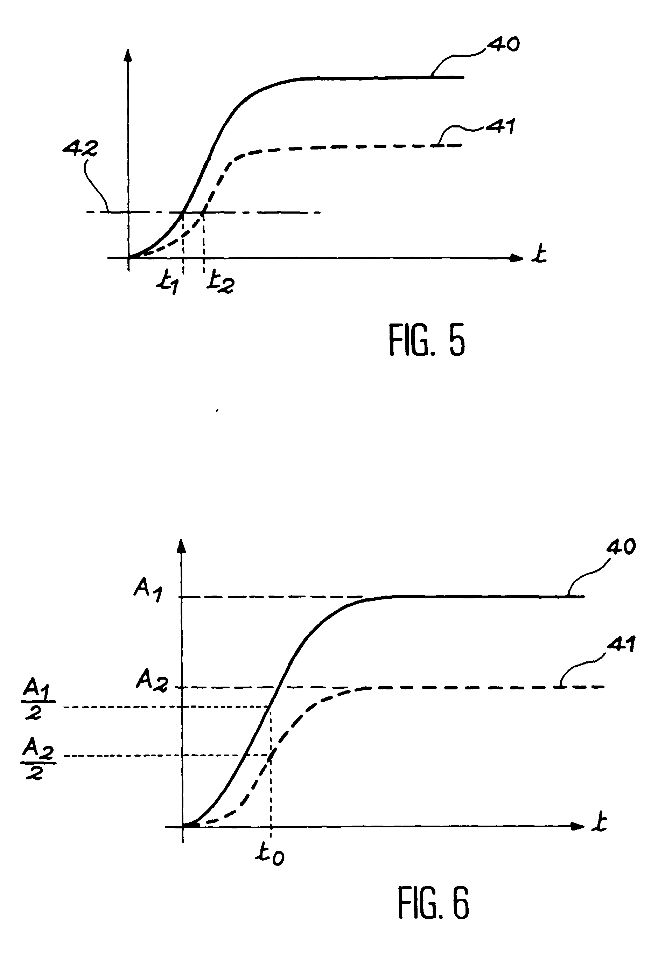

L'utilité du discriminateur 33 pourra être comprise à l'aide de la figure 5 qui illustre le courant produit par un photon arrivant sur un détecteur 30 en fonction du temps : ces courbes présentent un palier assez long précédé d'une croissance rapide à partir de la valeur nulle. La fenêtre temporelle utilisable est cependant si étroite qu'on ne peut mesurer le signal que pendant cette période transitoire d'accroissement de l'amplitude. La courbe en trait plein 40 illustre l'amplitude obtenue pour un photon qui a conservé son énergie, et la courbe en pointillés 41 celle d'un photon qui est arrivé avec une énergie inférieure dans le cristal 31, par exemple par une interaction avec un atome du corps du patient, ce qu'on observera très souvent. Les dispositifs de discrimination usuels fonctionnent avec un seuil 42 fixe : le temps t1 que met la courbe 40 à l'atteindre est bien inférieur à celui t2 que met la courbe 41. Si ce dernier temps t2 sort de la fenêtre temporelle, l'impulsion de la courbe 41 sera à tort rejetée comme ne correspondant pas à un événement à mesurer. Afin d'éviter cette erreur, on préfère mesurer l'amplitude du signal au bout d'un temps t0 déterminé et invariable, comme l'illustre la figure 6. Comme les courbes 40 et 41 susceptibles de provenir du même photon ont des rythmes de montée identiques avant que le palier ne soit atteint, les deux signaux auront atteint une même fraction de leur valeur de palier à cet instant, d'où la dénomination « discriminateur à fraction constante ». On pourra alors discriminer les impulsions en fonction de l'intensité atteinte, avec plus de sûreté qu'avec le procédé précédent.

## Revendications

1. Dispositif de détection pour un tomographe à émission de positrons, comprenant une paire de réseaux (3) opposés de détecteurs, les réseaux de détecteurs comprenant des cellules de détection composées d'un bloc (31) en matière semi-conductrice où les photons sont convertis en charges électriques, d'électrodes (32) de création d'un champ électrique dans le bloc, et d'un circuit électronique reliant les électrodes à un appareil de mesure de courant, caractérisé en ce que le circuit électronique comprend un préamplificateur (20) de courant, dépourvu de condensateur.

2. Dispositif de détection pour un tomographe selon la revendication 1, caractérisé en ce que la matière semi-conductrice a une résistivité supérieure à 10¹⁰ Ωcm.

3. Dispositif de détection pour un tomographe selon la revendication 2, caractérisé en ce que la matière semi-conductrice est un cristal de CdZnTe obtenu par une méthode de croissance à haute pression.

4. Dispositif de détection pour un tomographe selon l'une quelconque des revendications 1 à 3, caractérisé en ce que le circuit électronique comprend un discriminateur (33) de signal selon un seuil établi à fraction constante de temps jusqu'à un sommet du signal.

5. Dispositif de détection pour un tomographe selon l'une quelconque des revendications 1 à 4, caractérisé en ce que le circuit électronique est intégré selon un procédé ASIC.
